# EUROPEAN PATENT SPECIFICATION

(11) **EP 1 908 047 B1**
(45) Date of publication and mention of the grant of the patent: **03.08.2011**
(21) Application number: 06780004.5
(22) Date of filing: 27.06.2006
(51) Int. Cl.: G09F 9/35, G09F 9/33, G09F 9/30, G09F 11/29

(54) **BAGGED ROLLABLE DISPLAY WITH IMPROVED LIFETIME**
VERPACKTES AUFROLLBARES DISPLAY MIT VERBESSERTER LEBENSDAUER
SUPPORT D'AFFICHAGE POUVANT ETRE ROULE, DOTE D'UNE ENVELOPPE, A DUREE DE VIE PROLONGEE

(30) Priority: 30.06.2005 US 695664 P
(43) Date of publication of application: 09.04.2008
(73) Proprietor: Creator Technology B.V., 4837 BN Breda (NL)
(72) Inventor: HUITEMA, Hjalmar, Edzer, Ayco, NL-5501 CK Veldhoven (NL); SCHELLINGERHOUT, Nicolaas W., NL-5615 GH Eindhoven (NL)
(74) Representative: Goddar, Heinz J.
(86) International application number: PCT/IB2006/052139
(87) International publication number: WO 2007/004131

(56) References cited:
- WO-A2-2005/031685
- JP-A- 2004 131 137
- US-A- 5 234 105
- US-B1- 6 592 969

## Description

The invention relates to a display device assembly comprising a flexible display screen and a protective bag enclosing all or part of the flexible display screen.

Many electronic devices can now be made from organic materials to create a device that can flex or can even be bent or rolled. These materials include not only organic polymer based flexible substrates, but also semiconductor materials such as organic light emitting diodes (OLED's) and organic transistors and electro-optical materials such as electrophoretic materials. These electronic devices can, in particular, be display panels, which may be passive or may be active matrix displays. A display panel may be rollable, in that it can be coiled with a small radius, often 2 cm or less, in successive layers and pulled out or unfurled for use, for example from a housing, in particular a tubular housing. Other flexible display panels, if not rollable into a cylindrical space, may be capable of being wrapped around other components of the display itself or around or against another surface.

Organic-electronics or polymer-electronics based displays suffer from lifetime problems caused by external, environmental factors, such as physical damage from scratching or other abrasion and chemical changes from exposure to oxygen, moisture, radiation and other agents.

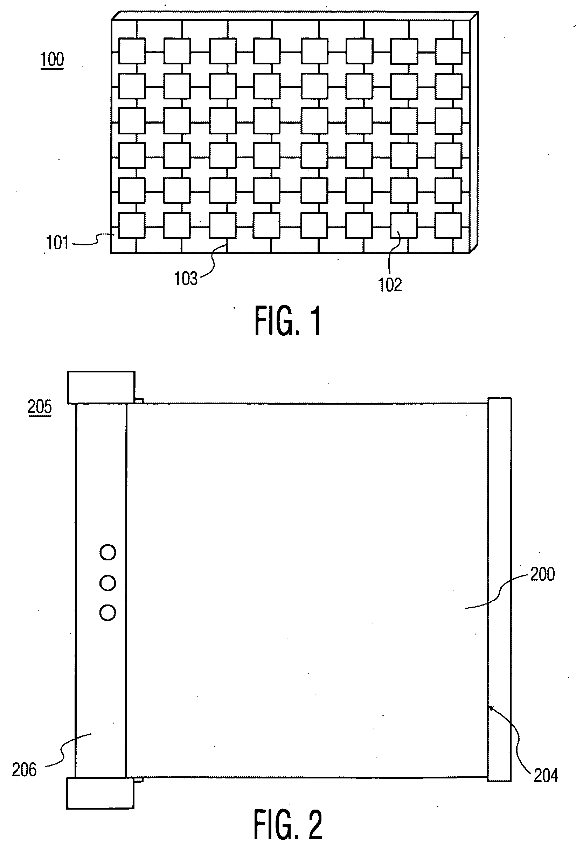

These problems are of particular concern with regard to rollable or wrapped displays. A rollable display, may be stored in a device or device housing, for example in a display "stick", when not in use. The display screen can then be unrolled to provide the user with a large display. A display of this kind is shown in **FIG. 1****.** For this to be possible, the Philips Electronics Polymer Vision business unit has developed a very thin (0.1 mm) flexible display that can be rolled up to a radius of 1cm. The roll-up radius depends strongly on the total thickness of the display.

A common solution for solving these problems in some displays and other devices is adding a sufficiently impermeable and scratch-resistant barrier layer on a semiconductor substrate. An additional layer is, however, often not viable for displays which must be flexible or rollable, because the additional layer increases the stiffness and
adds thickness to the display. For example, a layer of sealant material capable of holding a protective liquid such as thai disclosed for an electroluminescent device in application no. EP-1022931 A1, published July 26, 2000, presents this disadvantage.

Other ways have been disclosed for reducing the effects of external factors on flexible, rollable and other displays and devices having a polymer or other organic substrate. For example, application WO-2004/047059 A1 published June 3, 2004 discloses a protection foil which is rolled up with a rollable display and unrolls with the display to provide a soft surface that protects the display from damage on a front side. Publication WO 2005/031685 , published April 7, 2005, discloses a rollable display protected from the air by being kept in a protective atmosphere while it is stored in a cylindrical housing, but exposed when it is in use. The protective atmosphere protects the display when it is stored inside the stick, but docs not protect the display when it is in its rolled out position. These solutions are cumbersome and provide limited protection.

There is thus a need for a simpler, more effective apparatus and method to protect these flexible or rollable display devices as well as other organic substrates and other devices that may be subject to damage from external factors.

Publication WO2005/031685 discloses a flexible display screen provided with a protective container for storing the display screen. However the screen is not protected while rolled outside the container.

Publication JP2004/131137 describes a rigid display that is completely enclosed by a bag. This publication does not disclose a display device with a bag sealed among a seam to the flexible display screen.

According to the invention the bag is sealed to the flexible display screen along a seam. The screen is protected in the bag both during rolling in and out the display assembly and when in the operative position Thus the reduction in the lifetime of the display which is caused by external factors, is significantly reduced.

In another aspect, a protective bag and a display may be connected to each other only along a single line, the different layers (the top layer of the bag, the display, and the bottom layer of the bag) are then able to move freely.

The bag may be filled with an inert gas (nitrogen) or an inert and optically compensating liquid. The latter has the advantage that it gives very good optical performance, as well as being nearly incompressible, preventing the top layer from "wrinkling".

Additive materials may also be included in the bag or the liquid or substrate contained in it. For example, a getter may be kept in contact with a gas or other fluid or substrate within the protective bag to remove moisture or oxygen which was present during fabrication and remained in the protective bag when it was sealed or which may permeate into the protective bag during storage or use.

The current invention allows functions, such as protection, touch sensitivity and front lighting to be added to the display while keeping it sufficiently flexible.

These and other aspects of the invention will be apparent from and elucidated with reference to the embodiment(s) described hereinafter.

In the drawings:
**FIG. 1** shows a flexible or rollable display screen.
**FIG. 2** illustrates a rollable display screen and display stick used to store the display screen when it is not in use.
**FIG. 3** is a sectional view of a flexible display screen in a protective "bag."
**FIG. 4** is a plan view of a flexible display screen in a protective "bag."
**FIG. 5** is a plan view of a wrapable display screen in a protective bag or envelope.

In the Figures, like reference numerals generally refer to like parts. The Figures are not drawn to scale.

FIG.1 shows a display screen **100**. The display screen **100** includes a substrate **101**, a plurality of pixels **102** and a plurality of electrodes **103** connecting the pixels **102** to appropriate driver circuitry.

The substrate **101** may be a flexible substrate formed from an organic polymer or another suitable flexible material. The substrate may, for example, be made of a flexible polymer material, such as PET, PEN, polyurethane, polyester, polycarbonate or similar materials.

In the case of an active matrix array display device, the pixels **102** may include thin film transistors, which may be of an organic semiconductor material. The transistors may be any known suitable organic semiconductor material, such as a polythiophene derivative or a polyphenylvinylene derivative. The pixels have elcctro-optical display elements, such as organic liquid crystal material, organic semiconductor material such as a light emitting organic polymer or electrophoretic material. These organic materials are degradable upon exposure to an external environmental factor such as light, air or moisture, i.e., components made of these materials undergo unwanted chemical reactions as a result of their exposure to such factors. These components may also be soft or malleable and subject to damage from abrasion, handling or other physical contact or use.

**FIG. 2** illustrates a display screen **200** in a rollable display **205**. The rollable display **205** has a stick-type housing **206** containing drive electronics and including a controller or processor as well as a power source such as a battery, connectable via interconnecting pins on a pull-out grip (not shown) to an electronic apparatus such as a mobile telephone. The display screen **200** in **FIG. 2** provides a large display in the unrolled position (as shown), and can be rolled into the housing **206** when not used, thus providing a small form factor when not in use, and yet a large display when unrolled for use.

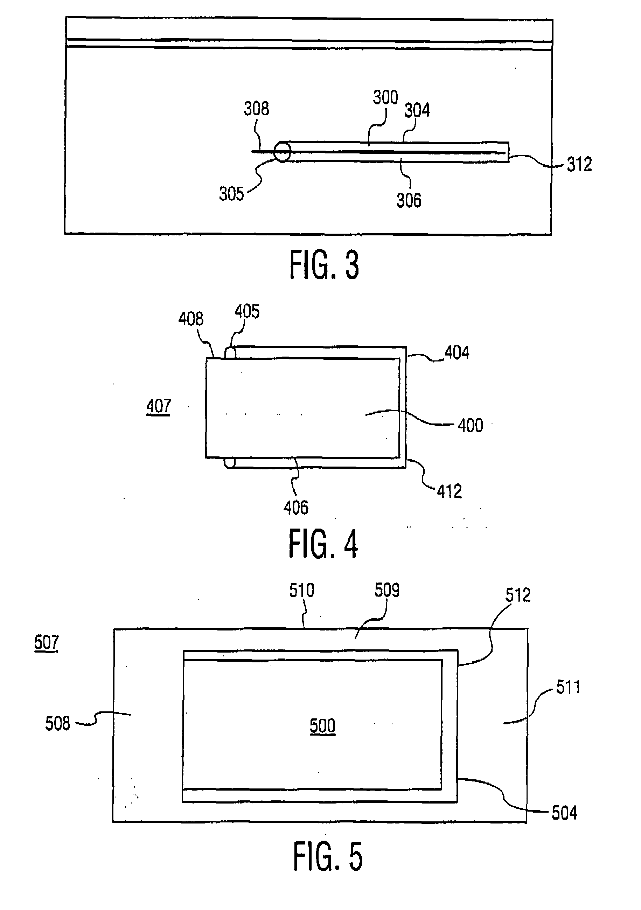

**FIG. 3** is a sectional view of a display assembly including a flexible display screen **300** in a protective envelope or bag **304** in accordance with the present invention. The bag **304** and display screen **300** are sealed at a seam **305**, here near an end **308** of the display screen **300** and extending in a direction substantially at a right angle to a length of the display screen **300**. The protective bag **304** and seam **305** create an enclosed space **306** which is substantially hermetically sealed. The enclosed space **306** is sufficient to allow the display screen **300** some freedom of movement - not only in the two dimensions of the display surface of the display screen **300**, but also in three dimensions. The display assembly in **FIG. 3** is partially enclosed by the protective bag **304**, having the end **308** outside the bag **304**.

The bag **304** can be constructed in many different ways, for example, from a top layer with a protective and, optionally, a light-guiding function polarizing, filtering or similar function, and a bottom layer with a protective function as well as many possible additional features, such as touch sensitivity capability. The bag **304** may be constructed of any durable, thin polymer or other plastic film of low permeability, such as a polyurethane, polyester, polycarbonate or similar materials. The material of the bag 304 must be suitable as a barrier or protective layer or for supporting such a layer.

The bag **304** may sealed to the display screen **300** by, for example, a glue seal of an epoxy or a urethane adhesive or other compound or method, as known to one of ordinary skill in the art. Any way of sealing that will effect a seal without affecting the organic electronics of the display screen **300** may be used.

An envelope edge **312** of the protective bag or envelope **304** may be constructed so that it can compensate the length differences when the display is rolled up. For this purpose the envelope edge **312** must be sufficiently flexible. This can be achieved in many ways, e.g. by using a flexible sealant on the right-hand edge, allowing shearing, or by keeping the layers of the bag sufficiently thin, allowing tilting.

The seal may also be at least partly made of a metal. Thin metal layers can be applied at the position of the seal on both the substrate of the display screen **300** and the protective bag **304**, outside the region of electrical contact. A metal seal, in particular, has a low permeability to water and oxygen. Metal layers can be made to form a seal by means such as. pressure bonding, soldering, laser welding or ultrasonic welding.

The enclosed space **306** may be filled with an inert gas such as nitrogen or argon or with an inert and optically compensating liquid. An optically compensating liquid may be chosen, for example, based on refractive index, color, light absorption characteristics or bother properties in order to enhance operation of the display. The liquid may contain a plasticizer, stabilizer or other additives.

The enclosed space **306** or material of the bag **304** may contain a getter to remove moisture or oxygen or other reactive substances that may be left in the space **306** after manufacture or which may permeate into the space **306** during storage or operation of the display screen **300**. The getter or getters may be, for example, a silica gel or a hydroscopic salt such as sodium chloride for moisture removal or a reactive metal alloy to remove oxygen, water, carbon dioxide and other impurities. The selection of a getter or getters to remove one variety or a number of kinds of impurities that would be encountered in a given display configuration is well known to one of ordinary skill in the art.

**FIG. 4** illustrates in plan view a display assembly **407** of an embodiment of the present invention as shown in **FIG. 3**. The flexible display screen **400** is in an envelope or protective bag **404** which encloses a space **406** and is sealed along a seam **405** transverse to a length of the display screen **400**. An end **408** of the display screen **400** extends outside the bag **404** and provides, for example, connection points for physical and electrical connection of the display assembly **407** to other components of the display. The end **408** may have a protective coating or barrier layer.

**FIG. 5** is a plan view of a wrapable display screen **500** in a protective envelope or bag **504**.

In the embodiment illustrated in **FIG. 5**, a display assembly **507** of the present invention employs a flexible, wrapable display screen **500** and a protective envelope or bag **504** integrated relative to a display section **509** of a display cover **510**. An attachment section **508** of display cover **510** facilitates coupling of flexible display assembly **507** to a housing (such as **206** in **FIG. 2**) in any conventional manner. An optional control section **511** of the display cover **510** facilitates a construction of a keyboard or any other type of mechanism for controlling the display assembly **507** as needed.

The flexible display screen **500** is sealed at a seam **505** opposite an envelope edge **512** of the bag **504**. The bag **504** may be secured to the display section **509**; for example at the envelope edge **512**. The display screen **500** may also be secured to the display section **509**, for example, at two or more points along the seam **505**. The display assembly **507** is then wrapable in that it may be folded around and unfolded from a housing. The display screen **500** remains enclosed in the protective bag **504** and secured by the protective bag **504** to the display section **509**, but is free to move in directions transverse to the seam **505**.

Although this invention has been described with reference to particular embodiments, it will be appreciated that many variations will be resorted to without departing from the spirit and scope of this invention as set forth in the appended claims. The specification and drawings are accordingly to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise; and
h) no specific sequence of acts is intended to be required unless specifically indicated.

## Claims

1. A display device assembly comprising:
- a flexible display screen (300) and
- a protective bag (304) enclosing all or part of the flexible display screen (300),
**characterized in that** the bag (304) is sealed to the flexible display screen (300) along a seam (305).

2. The display device assembly of claim 1 **characterized in that** the flexible display screen (300) has a surface extending in a first and second direction and the seam (305) extends in the first direction.

3. The display device assembly of claim 2 **characterized in that** one or more first edges of the flexible, display screen (300) extend in the first direction, one or more second edges of the flexible display screen extend in the second direction and two of the second edges of the flexible display screen (300) are not joined to the protective bag (304).

4. The display device assembly of claim 3 **characterized in that** at least one of the first edges is not joined to the protective bag (304).

5. The display device assembly of claim 1 **characterized in that** one or more first edges of the flexible display screen (300) extend in a first direction, one or more second edges of the flexible display screen (300) extend in a second direction and two or more surfaces of the protective bag (304) are joined by a flexible sealant at an envelope edge (312) opposite at least one of the first and second edges of the flexible display screen (300).

6. The display device assembly of claim 2 **characterized in that** the seam (305) extends only in the first direction.

7. The display device assembly of claim 1 **characterized in that** the assembly comprises a getter exposed to an enclosed space (306) within the bag (304).

8. The display device assembly of claim 1 **characterized in that** the flexible display screen (300) is rollable.

9. The display device assembly of claim 1, **characterized in that** an enclosed space (306) within the bag (304) contains an inert gas.

10. The display device assembly of claim 1 **characterized in that** an enclosed space (306) within the bag (304) contains an optically compensating liquid.

## Patentansprüche

1. Displayanordnung, umfassend:
- einen flexiblen Displaybildschirm (300) und
- eine Schutztasche (304), die den gesamten flexiblen Displaybildschirm oder einen Teil davon einschließt,
**dadurch gekennzeichnet, dass** die Tasche (304) entlang einer Naht (305) an dem flexiblen Displaybildschirm (300) vergesiegelt ist.

2. Displayanordnung des Anspruchs 1, **dadurch gekennzeichnet, dass** der flexible Displaybildschirm (300) eine Oberfläche hat, die sich in einer ersten und einer zweiten Richtung erstreckt, und die Naht (305) sich in der ersten Richtung erstreckt.

3. Displayanordnung des Anspruchs 2, **dadurch gekennzeichnet, dass** eine oder mehrere erste Kanten des flexiblen Displaybildschirms (300) sich in der ersten Richtung erstrecken, eine oder mehrere zweite Kanten des flexiblen Displaybildschirms sich in der zweiten Richtung erstrecken und zwei der zweiten Kanten des flexiblen Displaybildschirms (300) nicht mit der Schutztasche (304) verbunden sind.

4. Displayanordnung des Anspruchs 3, **dadurch gekennzeichnet, dass** mindestens eine der ersten Kanten nicht mit der Schutztasche (304) verbunden ist.

5. Displayanordnung des Anspruchs 1, **dadurch gekennzeichnet, dass** eine oder mehrere erste Kanten des flexiblen Displaybildschirms (300) sich in einer ersten Richtung erstrecken, eine oder mehrere zweite Kanten des flexiblen Displaybildschirms (300) sich in einer zweiten Richtung erstrecken und zwei oder mehrere Oberflächen der Schutztasche (304) durch ein flexibles Versieglungsmittel an einer Umschlagkante (312), die gegenüber mindestens einer der ersten und der zweiten Kanten des flexiblen Displaybildschirms (300) angeordnet ist, verbunden sind.

6. Displayanordnung des Anspruchs 2, **dadurch gekennzeichnet, dass** die Naht (305) sich nur in der ersten Richtung erstreckt.

7. Displayanordnung des Anspruchs 1, **dadurch gekennzeichnet, dass** die Anordnung einen Getter umfasst, der einem eingeschlossenen Raum (306) innerhalb der Tasche (304) ausgesetzt ist.

8. Displayanordnung des Anspruchs 1, **dadurch gekennzeichnet, dass** der flexible Displaybildschirm (300) rollbar ist.

9. Displayanordnung des Anspruchs 1, **dadurch gekennzeichnet, dass** ein eingeschlossener Raum (306) innerhalb der Tasche (304) ein Edelgas enthält.

10. Displayanordnung des Anspruchs 1, **dadurch gekennzeichnet, dass** ein eingeschlossener Raum (306) innerhalb der Tasche (304) eine optisch kompensierende Flüssigkeit enthält.

## Revendications

1. Unité de visualisation comprenant :
- un écran de visualisation (300) et
- un sac de protection (304) renfermant la totalité ou bien une partie de l'écran de visualisation souple (300), **caractérisé en ce que** le sac (304) est scellé sur l'écran de visualisation souple (300) le long d'un joint (305).

2. Unité de visualisation selon la revendication 1, **caractérisée en ce que** l'écran de visualisation souple (300) comporte une surface qui s'étend dans une première et une deuxième directions et **en ce que** le joint (305) s'étend dans la première direction.

3. Unité de visualisation selon la revendication 2, **caractérisée en ce que** l'un ou plusieurs des premiers bords de l'écran de visualisation souple (300) s'étendent dans la première direction, **en ce que** l'un ou plusieurs des deuxièmes bords de l'écran de visualisation souple s'étendent dans la deuxième direction, et **en ce que** deux des deuxièmes bords de l'écran de visualisation souple (300) ne sont pas joints au sac de protection (304).

4. Unité de visualisation selon la revendication 3, **caractérisée en ce que** l'un au moins des premiers bords n'est pas joint au sac de protection (304).

5. Unité de visualisation selon la revendication 1, **caractérisée en ce que** l'un ou plusieurs des premiers bords de l'écran de visualisation souple (300) s'étendent dans une première direction, **en ce que** l'un ou plusieurs des deuxièmes bords de l'écran de visualisation souple (300) s'étendent dans une deuxième direction, et **en ce que** deux surfaces ou davantage du sac de protection (304) sont jointes au moyen d'un produit d'étanchéité souple au niveau d'un bord de l'enveloppe (312) du côté opposé à au moins l'un des premiers et deuxièmes bords de l'écran de visualisation souple (300).

6. Unité de visualisation selon la revendication 2, **caractérisée en ce que** le joint (305) ne s'étend que dans la première direction.

7. Unité de visualisation selon la revendication 1, **caractérisée en ce que** l'unité comprend un getter exposé à un espace clos (306) à l'intérieur du sac (304).

8. Unité de visualisation selon la revendication 1, **caractérisée en ce que** l'écran de visualisation souple (300) peut être enroulé.

9. Unité de visualisation selon la revendication 1, **caractérisée en ce que** l'espace clos (306) à l'intérieur du sac (304) contient un gaz inerte.

10. Unité de visualisation selon la revendication 1, **caractérisée en ce que** l'espace clos (306) à l'intérieur du sac (304) contient un liquide à compensation optique.
